# EUROPÄISCHE PATENTANMELDUNG

(11) **EP 2 543 906 A2**
(43) Veröffentlichungstag der Anmeldung: **09.01.2013**
(21) Anmeldenummer: 12171989.2
(22) Anmeldetag: 14.06.2012
(51) Int. Cl.: F16F 1/12

(54) **Druck- oder Zugfederzentrierung**

(30) Priorität: 06.07.2011 DE 102011078708
(71) Anmelder: ZF Friedrichshafen AG, 88038 Friedrichshafen (DE)
(72) Erfinder: Lutz, Bernd, 88690 Uhldingen-Mühlhofen (DE); Fritz, Walter, 88085 Langenargen (DE)

(57) **Zusammenfassung**

Es wird eine Druck- oder Zugfederzentrierung im Einbauraum der Feder (1) vorgeschlagen, bei der die Feder (1) zumindest an einem ihrer Enden (5, 6) zentriert wird, wobei die Zentrierung an einem nicht federnden Teil der Feder (1) erfolgt.

## Beschreibung

Die Erfindung bezieht sich auf eine Druck- oder Zugfederzentrierung gemäß dem Oberbegriff des Patentanspruchs 1.

In Kraftfahrzeuggetrieben, insbesondere in Automatgetrieben werden die meisten Funktionen, beispielsweise das Schalten der Gänge oder das Einleiten von Retarderbremsungen mittels der hydraulischen Steuerung gesteuert. Hierbei werden in Ventilen der hydraulischen Steuerung durch eine entsprechende Bewegung von Kolben, die in der Regel über Federelemente vorgespannt sind, Steuerkanten geöffnet oder geschlossen. Um eine gleichbleibend gute Qualität der Getriebefunktionen zu gewährleisten, ist eine Reduzierung der auftretenden Reibungskräfte erforderlich.

Bei der Montage von Druckfedern, beispielsweise in zylindrische Bohrungen von Ventilkolben, kann es vorkommen, dass die Feder nicht immer zentriert in der Bohrung liegt, was unter anderem durch die Schwerkraft bedingt sein kann. Dies führt in nachteiliger Weise dazu, dass bei Bewegung des Kolbens Reibungsverluste durch die Reibung der Feder an der zylindrischen Bohrung entstehen, was zum einen die Hysterese der Feder vergrößert und zum anderen die Qualität der Steuerung verschlechtert.

Aus der DE 10 2004 005 790 A1 geht eine hydraulische Steuerung für ein Getriebe hervor, mit einer Ventileinrichtung, insbesondere einer Wegeventileinrichtung, zum Steuern einer Kühlung einer Kupplung und zum Sicherstellen eines Mindestdrucks und der Ansaugfunktion einer Pumpe, wobei die Ventileinrichtung nur ein einziges Ventil umfasst, mit dem sowohl die Kühlung der Kupplung als auch der Mindestdruck und die Ansaugfunktion der Pumpe sichergestellt werden können.

Das Ventil umfasst einen ersten Steuerkolben und einen zweiten Steuerkolben, die in einem Ventilgehäuse verschiebbar aufgenommen sind, und mehrere Anschlüsse, von denen jeweils mindestens einer mit der Kupplungskühlung, einem Rücklauf der Kupplungskühlung, der Pumpe oder einer Vorsteuerdruckquelle in Verbindung steht. Hierbei greift an einer der ersten Stirnseite entgegen gesetzten zweiten Stirnseite des ersten Steuerkolbens eine als Schraubendruckfeder ausgeführte Feder an, die derart zwischen der zweiten Stirnseite des ersten Steuerkolbens und der ersten Stirnseite des zweiten Steuerkolbens eingespannt ist, dass sich der erste Steuerkolben, wenn die an der ersten Stirnseite des ersten Steuerkolbens angreifende Druckkraft größer wird als die an der zweiten Stirnseite des ersten Steuerkolbens angreifende Federkraft, aus einer ersten Stellung in eine zweite Stellung verschiebt, wodurch eine Verbindung zwischen dem Rücklauf der Kupplungskühlung und dem Pumpenanschluss freigegeben wird.

Bei dem Ventil ist zudem vorgesehen, dass an der zweiten Stirnseite des ersten Steuerkolbens ein Dorn ausgebildet ist, welcher einen kreiszylinderförmigen Abschnitt konstanten Außendurchmessers aufweist, dem sich ein sich verjüngender Abschnitt anschließt, wobei das freie Ende des Dorns einen kreiszylinderförmigen Abschnitt mit verringertem Außendurchmesser aufweist. Gemäß der DE 10 2004 005 790 A1 dient der Dorn der Fixierung und Führung der Schraubendruckfeder des Ventils, die auf den Dorn aufgesetzt ist.

Aus der DE 199 57 272 A1 ist ein Kraftfahrzeug mit wenigstens einer Getriebeeinrichtung mit stufenlos verstellbarer Übersetzung, wenigstens einer hydraulischen Einrichtung zur Steuerung der Übersetzungsänderung und zum Halten einer eingestellten Übersetzung bekannt, wobei die hydraulische Einrichtung eine Ventileinrichtung aufweist, die wenigstens einen Anschluss zur Ansteuerung einer Übersetzungsänderung und wenigstens einen Anschluss zum Halten einer eingestellten Übersetzung aufweist. Hierbei ist die Ventileinrichtung vorzugsweise als Kolben-Zylinder-Einrichtung ausgebildet und in wenigstens einer Position federbelastet. Die Feder kann als Druckfeder oder Zugfeder ausgeführt sein. Gemäß der DE 199 57 272 A1 ist vorgesehen, dass die Feder zur Fixierung und Führung auf einen Innenschieber konstanten Durchmessers aufgesetzt ist.

Bei den Federfixierungen gemäß DE 10 2004 005 790 A1 und DE 199 57 272 A1 werden die Federn mittels mehrerer federnder Windungen zentriert, wodurch in nachteiliger Weise Reibungsverluste entstehen.

Der vorliegenden Erfindung liegt die Aufgabe zugrunde, eine Druck- oder Zugfederzentrierung im Einbauraum der Druckfeder anzugeben, bei der die Reibungsverluste im Betrieb der Feder weitgehend minimiert werden, wodurch eine negative Beeinflussung der Federkennlinie vermieden wird.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird eine Druck- oder Zugfederzentrierung im Einbauraum der Feder vorgeschlagen, bei der die Feder zumindest an einem ihrer Enden zentriert wird, wobei die Zentrierung an einem nicht federnden Teil der Feder erfolgt. Vorzugsweise wird die Feder an der axial betrachtet letzten Windung des jeweiligen Endes zentriert.

In vorteilhafter Weise beschränkt sich gemäß einer Weiterbildung der Erfindung die Länge der Zentrierung der Druck- oder Zugfeder auf eine Länge, die im Wesentlichen der Drahtdicke der Feder entspricht.

Im Rahmen einer vorteilhaften Weiterbildung der Erfindung ist die Druck- oder Zugfeder an beiden Enden an der jeweils axial betrachtet letzten Windung zentriert.

Da in vorteilhafter Weise zum Erreichen einer planen und winkligen Fläche an den Federenden einer Druck- oder Zugfeder jeweils die letzte Windung angelegt und abgeschliffen wird, hat die jeweils letzte Windung eines Endes der Feder keine federnde Wirkung, so dass durch die erfindungsgemäße Konzeption die Federkennlinie nicht beeinflusst wird.

Die Zentrierung kann an jedem Ende der Druck- oder Zugfeder am Außen- oder am Innendurchmesser der Feder erfolgen, wobei der Außen- und Innendurchmesser der Feder mit Ausnahme der jeweils letzten Windungen beider Enden der Feder für den Fall, dass die Feder an beiden Enden zentriert wird oder mit Ausnahme der letzten Windung eines Endes für den Fall, dass die Feder an einem Ende zentriert wird, im Betrieb keine Bauteile berührt.

Durch die erfindungsgemäß vorgeschlagene Druck- oder Zugfederzentrierung wird auf einfache und kostengünstige Weise gewährleistet, dass die Reibungsverluste im Betrieb der Feder weitgehend minimiert werden, ohne die Funktionalität der Feder zu beeinträchtigen.

Die Erfindung wird im Folgenden anhand der beigefügten Figuren beispielhaft näher erläutert. Es zeigen:
- Figur 1:: eine schematische Schnittansicht einer gemäß einer ersten Ausführungsform der Erfindung zentrierten Druckfeder eines Ventils; und
- Figur 2:: eine schematische Schnittansicht einer gemäß einer ersten Ausführungsform der Erfindung zentrierten Druckfeder eines Ventils.

Gleiche Bezugszeichen bezeichnen gleiche Bauteile.

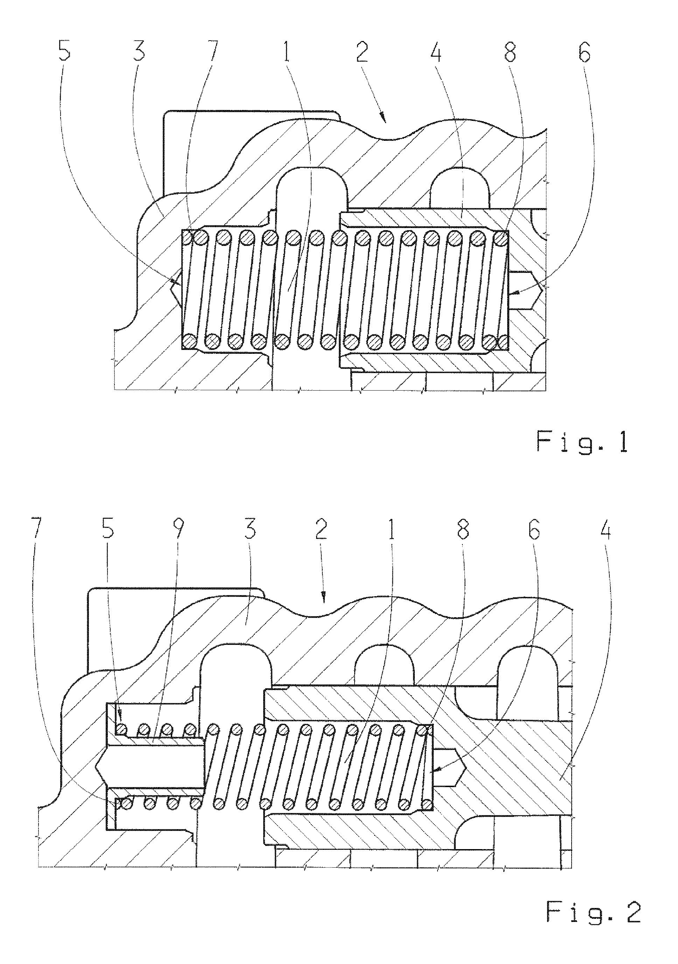

In Figur 1 ist eine als Druckfeder 1 ausgeführte Feder eines Ventils 2 einer hydraulischen Steuerung eines Kraftfahrzeuggetriebes dargestellt, welche sich axial betrachtet an ein Gehäuse 3 und an einen Kolben 4 abstützt.

Gemäß der Erfindung ist die Druckfeder 1 an beiden Enden 5, 6 an der axial betrachtet jeweils letzten Windung 7, 8 am Außendurchmesser der letzten Windungen 7, 8 zentriert, wobei der Außendurchmesser der Druckfeder 1 zwischen den beiden letzten Windungen 7, 8 und somit der federnde Teil der Druckfeder keine Bauteile berührt, wodurch die Reibungsverluste minimiert werden.

Hierbei sind der Innendurchmesser des Kolbens 4 und der Innendurchmesser des Gehäuses 3 im Bereich der Zentrierung der Druckfeder 1 kleiner dimensioniert als axial betrachtet im weiteren Verlauf, um zu gewährleisten, dass der federnde Teil der Druckfeder keine Bauteile berührt.

Wie aus Figur 1 ersichtlich, beschränkt sich die Länge der Zentrierung der Druckfeder 1 auf eine Länge, die im Wesentlichen der Drahtdicke der Druckfeder 1 entspricht.

Bei dem in Figur 2 gezeigten Beispiel ist die Druckfeder 1 im Ventil 2 an dem dem Kolben 4 abgewandten Ende 5 an der axial betrachtet letzten Windung 7 am Innendurchmesser der Windung 7 zentriert, wobei die Zentrierung an dem dem Kolben 4 zugewandten Ende 6 analog dem Ausführungsbeispiel gemäß Figur 1 am Außendurchmesser der letzten Windung 8 erfolgt.

Bezugnehmend auf Figur 2 ist in diesem Fall das dem Kolben 4 abgewandten Ende 5 der Druckfeder 1 auf einen Vorsprung 9 aufgesetzt, wobei der Außendurchmesser des Vorsprungs 9 sich axial betrachtet nach dem Bereich der Zentrierung verjüngt, um zu gewährleisten, dass der federnde Teil der Druckfeder 1 den Vorsprung 9 nicht berühren kann.

Im Rahmen einer Weiterbildung der Erfindung kann die anhand einer Druckfeder beschriebene Lösung auch auf eine Zugfederzentrierung übertragen werden.

### Bezugszeichen

- 1: Druckfeder, Feder
- 2: Ventil
- 3: Gehäuse
- 4: Kolben
- 5: Ende der Druckfeder
- 6: Ende der Druckfeder
- 7: letzte Windung
- 8: letzte Windung
- 9: Vorsprung

## Patentansprüche

1. Druck- oder Zugfederzentrierung im Einbauraum der Feder (1), **dadurch gekennzeichnet, dass** die Feder (1) zumindest an einem ihrer Enden (5, 6) zentriert wird, wobei die Zentrierung an einem nicht federnden Teil der Feder (1) erfolgt.

2. Druck- oder Zugfederzentrierung im Einbauraum der Feder (1) nach Anspruch 1, **dadurch gekennzeichnet, dass** die Feder (1) zumindest an einem ihrer Enden (5, 6) an der axial betrachtet letzten Windung (7, 8) des jeweiligen Endes (5, 6) zentriert wird.

3. Druck- oder Zugfederzentrierung im Einbauraum der Feder (1) nach Anspruch 1 oder 2, **dadurch gekennzeichnet, dass** die Zentrierung am Außen- oder am Innendurchmesser der Feder (1) erfolgt, wobei der Außen- und Innendurchmesser der Feder (1) mit Ausnahme der jeweils letzten Windungen (7, 8) beider Enden (5, 6) der Feder (1) für den Fall, dass die Feder (1) an beiden Enden (5, 6) zentriert wird oder mit Ausnahme der letzten Windung eines Endes für den Fall, dass die Feder (1) an einem Ende zentriert wird, im Betrieb der Feder (1) keine Bauteile berührt.

4. Druck- oder Zugfederzentrierung im Einbauraum der Feder (1) nach Anspruch 1, 2 oder 3, **dadurch gekennzeichnet, dass** sich die Länge der Zentrierung der Feder (1) auf eine Länge beschränkt, die im Wesentlichen der Drahtdicke der Feder (1) entspricht.

5. Druck- oder Zugfederzentrierung im Einbauraum der Feder (1) nach Anspruch 1, 2, 3 oder 4, **dadurch gekennzeichnet, dass** die Feder (1) an beiden Enden (5, 6) am Außendurchmesser zentriert ist oder dass die Feder (1) an beiden Enden (5, 6) am Innendurchmesser zentriert ist oder dass die Feder (1) an einem Ende am Innendurchmesser und am anderen Ende am Außendurchmesser zentriert ist.

6. Druck- oder Zugfederzentrierung im Einbauraum der Feder (1) nach einem der vorangehenden Ansprüche, **dadurch gekennzeichnet, dass** die Feder (1) eine Druckfeder eines Ventils (2) ist.
